# EUROPÄISCHE PATENTSCHRIFT

(11) **EP 3 898 346 B1**
(45) Veröffentlichungstag und Bekanntmachung des Hinweises auf die Patenterteilung: **22.01.2025**
(21) Anmeldenummer: 19805184.9
(22) Anmeldetag: 12.11.2019
(51) Int. Cl.: B60S 1/38

(54) **WISCHBLATT, INSBESONDERE FÜR EIN KRAFTFAHRZEUG**
WIPER BLADE, IN PARTICULAR FOR A MOTOR VEHICLE
BALAI D'ESSUIE-GLACE, EN PARTICULIER POUR VÉHICULE À MOTEUR

(30) Priorität: 19.12.2018 DE 102018222242
(43) Veröffentlichungstag der Anmeldung: 27.10.2021
(73) Patentinhaber: Robert Bosch GmbH, 70442 Stuttgart (DE)
(72) Erfinder: BRATEC, Herve, 3012 WILSELE (BE); WILLEKENS, Pieter, 3001 Heverlee (BE)
(86) Internationale Anmeldenummer: PCT/EP2019/080980
(87) Internationale Veröffentlichungsnummer: WO 2020/126229

(56) Entgegenhaltungen:
- EP-A1- 2 808 208
- DE-A1- 102009 002 411
- DE-A1- 102009 032 375
- US-A- 4 152 808
- US-A1- 2011 016 653
- US-A1- 2012 005 856
- US-A1- 2017 072 910

## Beschreibung

### Stand der Technik

Die Erfindung betrifft ein Wischblatt, insbesondere für ein Kraftfahrzeug, nach Gattung des unabhängigen Anspruchs.

Es sind schon zahlreiche Wischblätter für Kraftfahrzeuge bekannt, die eine Wischleiste, ein langgestrecktes Trägerelement und ein Heizelement aufweisen. Das Trägerelement haltert hierbei die Wischleiste und weist eine Innenschiene auf, die von einer Kunststoffschicht überzogen ist und diese damit zumindest teilweise ummantelt. Hierbei wird auf das Trägerelement ein Heizelement aufgeklebt um das Trägerelement und die Wischleiste, insbesondere bei niedrigen Temperaturen zu Erwärmen um ein einfrieren des Wischblatts zu verhindern. Aus der US 2011/016653 A1 ist ein Wischblatt bekannt, bei dem eine Innenschiene in einem Kunststoffteil gelagert ist, wobei die Innenschiene an eine Heizeinrichtung angrenzt. Weiterer Stand der Technik ist aus der DE 10 2009 032375 A1 und der US 2017/072910 A1 bekannt.

### Offenbarung der Erfindung

### Vorteile der Erfindung

Das erfindungsgemäße Wischblatt mit den Merkmalen des Hauptanspruchs hat den Vorteil, dass das Heizelement im Wesentlichen im Innern des Trägerelements angeordnet ist. Auf diese Weise ist das Heizelement optimal vor äußeren Einflüssen geschützt.

Durch die in den Unteransprüchen aufgeführten Maßnahmen ergeben sich vorteilhafte Weiterbildungen und Verbesserungen der im Hauptanspruch angegebenen Merkmale.

Nach der Erfindung ist das Heizelement im Wesentlichen zwischen der Innenschiene und der Kunststoffschicht angeordnet. Dies ist in der Fertigung relativ einfach herzustellen.

Nach der Erfindung ist das Heizelement als Heizfolie ausgebildet.

In einer wirkungsvollen Ausgestaltung weist das Heizelement mindestens ein Heizmittel auf, dass im Heizelement zumindest teilweise mäanderartig geführt ist.

In einer einfachen und kostengünstigen Ausführung ist das Heizmittel im Heizelement gitterartig geführt.

Hierbei ist es als besonders vorteilhaft anzusehen, wenn das Heizmittel innerhalb einer Isolatorfolie angeordnet ist.

Besonders vorteilhaft ist es, wenn das Trägerelement beliebig kürzbar ist. Auf diese Weise ist das Trägerelement besonders einfach herzustellen.

Hierbei ist es von besonderem Vorteil, wenn das Heizelement an jeder Position seiner Längserstreckung kontaktierbar ist, da dies die Fertigung des Wischblatts wesentlich erleichtert.

Idealerweise ist das Heizelement ohne Funktionseinbuße beliebig kürzbar, so dass bei der Herstellung des Trägerelements nicht auf das Heizelement geachtet werden muss.

### Beschreibung der Zeichnungen

Verschiedene Ausführungsbeispiele der Erfindung sind in den Zeichnungen dargestellt und in der nachfolgenden Beschreibung näher erläutert. Es zeigen:
- Figur 1: ein erfindungsgemäßes Wischblatt in schematischer Darstellung,
- Figur 2: das Trägerelement eines erfindungsgemäßen Wischblatts,
- Figur 3: ein Längsschnitt durch ein erfindungsgemäßes Wischblatt in schematischer Darstellung,
- Figur 4: ein Längsschnitt durch ein Trägerelement eines erfindungsgemäßen Wischblatts in einer Variation,
- Figur 5: einen Längsschnitt durch ein Trägerelement im Bereich des Heizelementes und
- Figur 6: einen Längsschnitt durch ein Trägerelement im Bereich des Heizelementes in einer Variation von Figur 5.

### Beschreibung der Ausführungsbeispiele

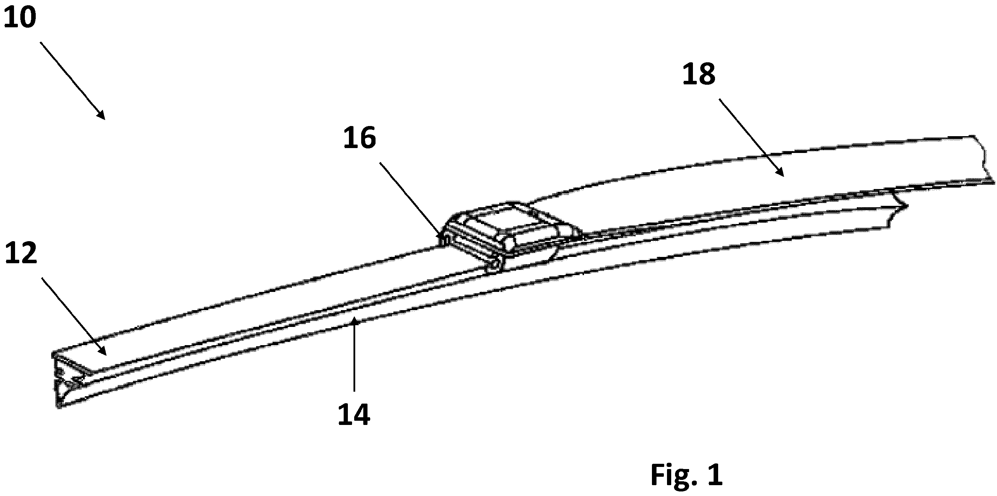

In Figur 1 ist ein erfindungsgemäßes Wischblatt 10 in einer schematischen Darstellung gezeigt. Das Wischblatt 10 umfasst ein Trägerelement 12 und eine Wischleiste 14. Am Trägerelement 12 ist ein Befestigungsmittel 16 angeordnet, dass der Befestigung des Wischblatts 10 an einem Wischerarm 18 dient.

Das Trägerelement 12 ist als langgestreckte Schiene ausgebildet, die von einem Kunststoff ummantelt ist. Auf der der - hier übersichtlichkeitshalber nicht gezeichneten - Scheibe zugewandten Seite des Trägerelements 12 ist die Wischleiste 14 angeordnet, die aus einem gummiartigen Material ausgebildet ist. Auf der der Wischleiste 14 abgewandten Seite des Trägerelements 12 ist das Befestigungselement 16 angeordnet.

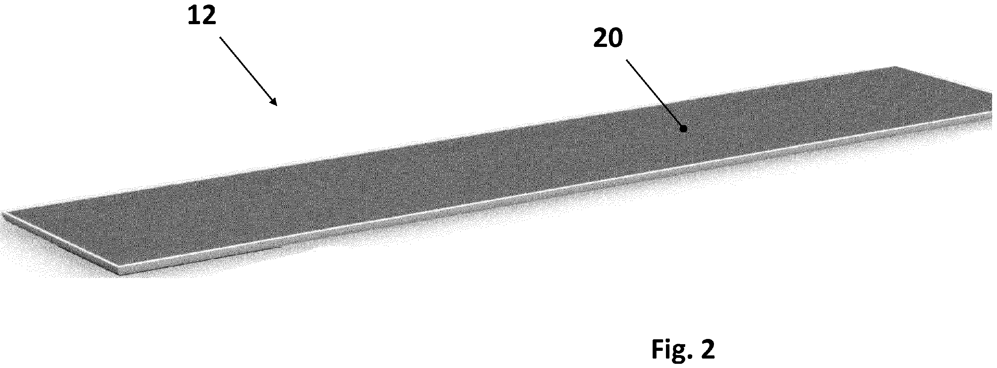

In Figur 2 ist das Trägerelement 12 eines erfindungsgemäßen Wischblatts 10 in perspektivischer Darstellung gezeigt. Das Trägerelement 12 ist als langgestreckte Metallschiene ausgebildet, die von einer Kunststoffschicht 20 ummantelt ist. Das Trägerelement 12 ist im Verhältnis zu seiner Breite sehr lang, also mindestens 10 mal länger als breit, so dass es eine Längserstreckung aufweist. In der Fertigung wird das Trägerelement 12 quasi endlos hergestellt und auf Rollen der Fertigung zugeführt. Auf einer Rolle sind dann eine Vielzahl von - in der Länge noch nicht festgelegten - Trägerelementen 12 vorhanden, die bei der Fertigung des Wischblattes 10 jeweils in erforderlicher Länge abgeschnitten werden.

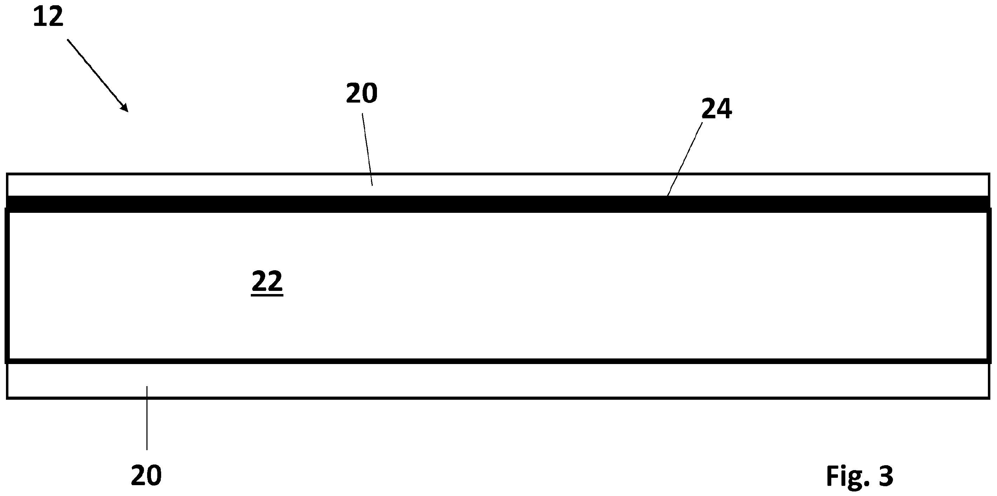

In Figur 3 ist ein Längsschnitt durch ein Trägerelement 12 eines erfindungsgemäßen Wischblatts 10 in schematischer Darstellung gezeigt.

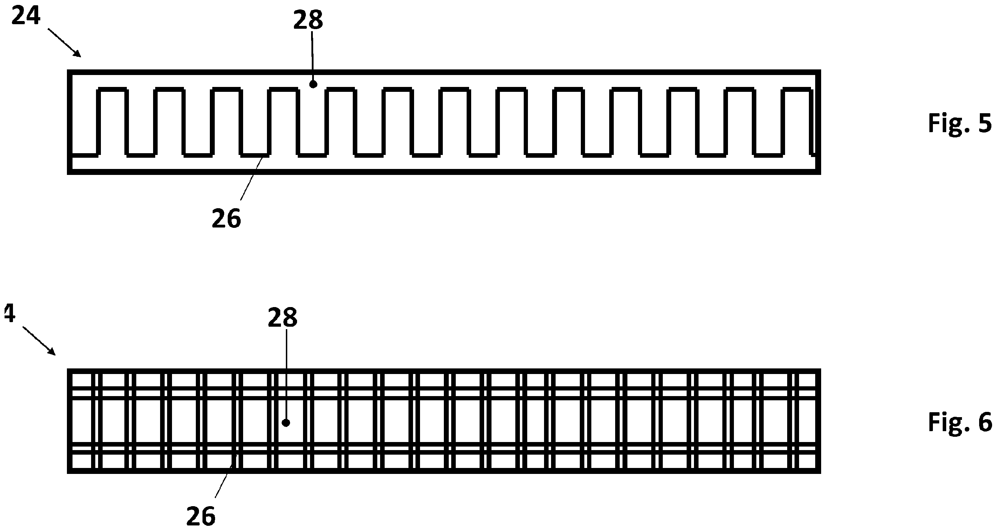

Das Trägerelement 12 weist eine Innenschiene 22 auf und ist von der Kunststoffschicht 20 ummantelt. Zwischen der Innenschiene 22 und der Kunststoffschicht 20 ist auf der, der Wischleiste 14 (Figur 1) abgewandten Seite ein Heizelement 24 angeordnet, dass als Heizfolie ausgebildet ist. Innerhalb des Heizelements 24 ist ein Heizmittel 26 (Figur 5) angeordnet.

Die Innenschiene 22 ist aus Metall ausgebildet, insbesondere aus Federstahl und wird in der Fertigung derart vorgebogen, so dass ihre Krümmung entlang des Wischblattes 10 stärker ist als die maximale Krümmung der Scheibe, für die das Wischblatt 10 vorgesehen ist. Nach der Erfindung ist auch die Innenschiene 22 gefertigt, anschließend das Heizelement 24 aufgebracht und dann das Ganze mit der Kunststoffschicht 22 umspritzt.

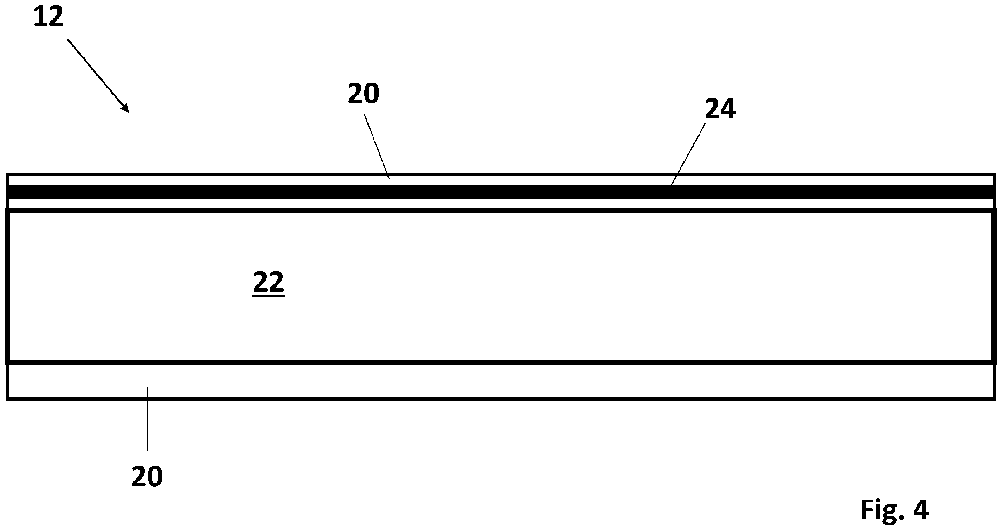

In Figur 4 ist der Schnitt aus Figur 3 in einer nicht beanspruchte Variation gezeigt. Das Trägerelement 12 umfasst ebenfalls hier eine Innenschiene 22, die aus Stahl ausgebildet ist. Die Innenschiene ist mit Ausnahme der Stirnseite, von der Kunststoffschicht 20 ummantelt. In der oberen, der Wischleiste 14 (Figur 1) abgewandten Seite des Trägerelements 12 ist innerhalb der Kunststoffschicht 20 das Heizelement 24 angeordnet. Auch hier kann in einer nicht beanspruchten Variation zunächst die Innenschiene 22 gefertigt werden, anschließend die Kunststoffschicht 22 teilweise aufgebracht werden und im nächsten Schritt das Heizelement 24 aufgebracht werden. Nach dem Aufbringen des Heizelements 24 wird dann noch der Rest der Kunststoffschicht 22 aufgebracht.

In einer weiteren Variation der Erfindung kann das Heizelement 24 auch zusätzlich oder alternativ auf der der Wischleiste 14 zugewandten Seite angeordnet sein. Dies gilt sowohl für die Ausbildung nach Figur 3, bei der das Heizelement 24 zwischen Innenschiene 22 und Kunststoffschicht 20 angeordnet ist, als auch bei einer Ausbildung nach Figur 4, in der das Heizelement 24 innerhalb der Kunststoffschicht 20 angeordnet ist.

In Figur 5 ist das Heizelement 24 eines erfindungsgemäßen Wischblatts 10 in einer schematischen Draufsicht gezeigt. Das Heizelement 24 ist als Heizfolie ausgebildet und umfasst ein Heizmittel 26, dass in einer Isolatorfolie 28 eingebettet ist. Das Heizmittel 26 ist hierbei als Heizdraht ausgebildet, der sich mäanderförmig in oder auf der Isolatorfolie 28 angeordnet ist. Anstatt eines Heizdrahtes kann selbstverständlich auch ein anderes Element vorgesehen sein, bspw. eine Carbonschicht, oder eine Keramikschicht die sich erwärmt, wenn eine Kontaktierung mit einer elektrischen Spannung vorgenommen wird. Im Stand der Technik sind derartige Heizelemente 24 als solche bekannt.

In Figur 6 ist eine Variation des Heizelements 24 aus Figur 5 gezeigt. Wie in Figur 5 ist das Heizelement 24 als Heizfolie ausgebildet, bei der in oder auf der Isolatorfolie 28 Heizmittel 26 angeordnet sind. Im Gegensatz zur Figur 5 ist das Heizmittel 26 hier gitterartig angeordnet.

Die Ausbildung des Heizelements 24 ist derart, dass es in jeder beliebigen Länge abgelängt werden kann und trotzdem funktionsfähig bleibt, also weiterhin seine Heizfunktion erfüllt.

## Patentansprüche

1. Wischblatt (10), insbesondere für ein Kraftfahrzeug, mindestens umfassend
• eine Wischleiste (14),
• ein langgestrecktes Trägerelement (12),
• ein Heizelement (24),
wobei
• das Trägerelement (12) die Wischleiste (14) haltert,
• das Trägerelement (12) eine Innenschiene (22) aus Metall aufweist,
**dadurch gekennzeichnet, dass**
• das Trägerelement (12) weiterhin eine Kunststoffschicht (20) aufweist,
• die Kunststoffschicht (20) die Innenschiene (22) des Trägerelements (12) ummantelt,
wobei
• das Heizelement (24) als Heizfolie ausgebildet ist und im Wesentlichen im Inneren des Trägerelements (12), zwischen der Innenschiene (22) und der Kunststoffschicht (20), angeordnet ist, wobei zuerste die Innenschiene (22) gefertigt ist, anschließend das Heizelement (24) aufgebracht ist und dann das Ganze mit der Kunststoffschicht (22) umspritzt ist.

2. Wischblatt (10) nach einem der vorhergehenden Ansprüche, **dadurch gekennzeichnet, dass** das Heizelement (24) mindestens ein Heizmittel (26) aufweist, das im Heizelement (24) zumindest teilweise mäanderartig geführt ist.

3. Wischblatt (10) nach einem der vorhergehenden Ansprüche, **dadurch gekennzeichnet, dass** das Heizelement (24) mindestens ein Heizmittel (26) aufweist, das im Heizelement (24) zumindest teilweise gitterartig geführt ist.

4. Wischblatt (10) nach einem der vorhergehenden Ansprüche 5 bis 6, **dadurch gekennzeichnet, dass** das Heizmittel (26) innerhalb einer Isolatorfolie (28) angeordnet ist.

5. Wischblatt (10) nach einem der vorhergehenden Ansprüche, **dadurch gekennzeichnet, dass** das Trägerelement (12) beliebig kürzbar ist.

6. Wischblatt (10) nach einem der vorhergehenden Ansprüche, **dadurch gekennzeichnet, dass** das Heizelement (24) an jeder Position seiner Längserstreckung kontaktierbar ist.

7. Wischblatt (10) nach einem der vorhergehenden Ansprüche, **dadurch gekennzeichnet, dass** das Heizelement (24) ohne Funktionseinbuße beliebig kürzbar ist.

## Claims

1. Wiper blade (10), in particular for a motor vehicle, at least comprising
• a wiper strip (14),
• an elongate carrier element (12),
• a heating element (24),
wherein
• the carrier element (12) holds the wiper strip (14),
• the carrier element (12) has an inner rail (22) composed of metal, **characterized in that**
• the carrier element (12) furthermore has a plastic layer (20),
• the plastic layer (20) encases the inner rail (22) of the carrier element (12),
wherein
• the heating element (24) is in the form of a heating sheet and is arranged substantially in the interior of the carrier element (12), between the inner rail (22) and the plastic layer (20), wherein firstly the inner rail (22) is manufactured, subsequently the heating element (24) is applied and then the whole arrangement is encapsulated with the plastic layer (22).

2. Wiper blade (10) according to one of the preceding claims, **characterized in that** the heating element (24) has at least one heating means (26) which is routed at least partially in a meandering manner in the heating element (24).

3. Wiper blade (10) according to either of the preceding claims, **characterized in that** the heating element (24) has at least one heating means (26) which is routed at least partially in a grid-like manner in the heating element (24).

4. Wiper blade (10) according to either of preceding Claims 5 and 6, **characterized in that** the heating means (26) is arranged within an insulator sheet (28).

5. Wiper blade (10) according to one of the preceding claims, **characterized in that** the carrier element (12) is shortenable as desired.

6. Wiper blade (10) according to one of the preceding claims, **characterized in that** the heating element (24) is contactable at any position of its longitudinal extent.

7. Wiper blade (10) according to one of the preceding claims, **characterized in that** the heating element (24) is shortenable as desired without any loss of function.

## Revendications

1. Balai d'essuie-glace (10), notamment pour un véhicule automobile, comprenant au moins
• une lame d'essuyage (14),
• un élément de support allongé (12),
• un élément chauffant (24),
dans lequel
• l'élément de support (12) supporte la lame d'essuyage (14),
• l'élément de support (12) présente un rail intérieur (22) en métal, **caractérisé en ce que**
• l'élément de support (12) présente en outre une couche de matière plastique (20),
• la couche de matière plastique (20) enveloppe le rail intérieur (22) de l'élément de support (12),
dans lequel
• l'élément chauffant (24) est réalisé sous forme de feuille chauffante et est agencé essentiellement à l'intérieur de l'élément de support (12), entre le rail intérieur (22) et la couche de matière plastique (20), le rail intérieur (22) étant tout d'abord fabriqué, puis l'élément chauffant (24) étant appliqué et l'ensemble étant ensuite surmoulé avec la couche de matière plastique (22).

2. Balai d'essuie-glace (10) selon l'une quelconque des revendications précédentes, **caractérisé en ce que** l'élément chauffant (24) présente au moins un moyen de chauffage (26) qui est guidé au moins partiellement en méandres dans l'élément chauffant (24).

3. Balai d'essuie-glace (10) selon l'une quelconque des revendications précédentes, **caractérisé en ce que** l'élément chauffant (24) présente au moins un moyen de chauffage (26) qui est guidé au moins partiellement en forme de grille dans l'élément chauffant (24).

4. Balai d'essuie-glace (10) selon l'une quelconque des revendications précédentes 5 à 6, **caractérisé en ce que** le moyen de chauffage (26) est agencé à l'intérieur d'une feuille isolante (28).

5. Balai d'essuie-glace (10) selon l'une quelconque des revendications précédentes, **caractérisé en ce que** l'élément de support (12) peut être raccourci à volonté.

6. Balai d'essuie-glace (10) selon l'une quelconque des revendications précédentes, **caractérisé en ce que** l'élément chauffant (24) peut être mis en contact à n'importe quelle position de son extension longitudinale.

7. Balai d'essuie-glace (10) selon l'une quelconque des revendications précédentes, **caractérisé en ce que** l'élément chauffant (24) peut être raccourci à volonté sans perte de fonction.
